# EUROPÄISCHE PATENTSCHRIFT

(11) **EP 3 345 488 B1**
(45) Veröffentlichungstag und Bekanntmachung des Hinweises auf die Patenterteilung: **29.07.2020**
(21) Anmeldenummer: 18150618.9
(22) Anmeldetag: 08.01.2018
(51) Int. Cl.: A23K 10/30, A23K 10/37, A23K 50/20

(54) **VERFAHREN ZUR HERSTELLUNG VON PFERDEFUTTER**
METHOD FOR THE PREPARATION OF HORSE FEED
PROCÉDÉ DE FABRICATION D'ALIMENTS POUR CHEVAUX

(30) Priorität: 06.01.2017 DE 102017200138; 09.01.2017 DE 102017200224
(43) Veröffentlichungstag der Anmeldung: 11.07.2018
(73) Patentinhaber: Deutsches Institut für Lebensmitteltechnik e.V., 49610 Quakenbrück (DE); Emma-Eventing GmbH, 49626 Bippen (DE)
(72) Erfinder: Peiß, Ansgar, 49626 Bippen (DE); Kießling, Martina, 49610 Quakenbrück (DE)
(74) Vertreter: Taruttis, Stefan Georg

(56) Entgegenhaltungen:
- FR-A5- 2 140 855
- GB-A- 2 406 516
- GB-A- 191 407 742
- KR-A- 20090 040 540
- US-A- 5 035 913
- US-A1- 2005 214 438
- Anonymous: "marstall Mash", Verdauungsregulator, 1. September 2016 (2016-09-01), XP055454584, Gefunden im Internet: URL:http://www.marstall.de/pdf/marstall_ma sh.pdf [gefunden am 2018-02-27]

## Beschreibung

Die vorliegende Erfindung betrifft ein Verfahren zur Herstellung von Pferdefutter, in dem das enthaltene Getreide im Wesentlichen vollständig gequollen ist, wobei sich das Pferdefutter in luftdichter Verpackung durch eine Haltbarkeit von zumindest 6 Wochen, bevorzugt von zumindest 3 bis 6 Monaten, bei 20 °C auszeichnet. Das Verfahren führt dazu, dass das Pferdefutter keine vegetativen Mikroorganismen, insbesondere keine vegetativen Bakterien oder Pilze bzw. Hefen enthält und keine Milben. Das Pferdefutter enthält Schleimbildner, z.B. Weizenkleie und/oder Leinsamen, der bevorzugt gemahlen ist, deren Schleim ausgebildet bzw. verfügbar und wirksam ist. Daher ist das mit dem Verfahren hergestellte Pferdefutter gebrauchsfertig bzw. zum Verzehr fertig und kann unmittelbar aus der Verpackung verfüttert werden. Das Pferdefutter weist durch das Herstellungsverfahren bevorzugt eine gute Verdaulichkeit auf, die besonders bevorzugt auf einen Aufschluß des enthaltenen Getreides und/oder auf eine hohe Wirksamkeit der Schleimstoffe zurückgeht, die in den Rohstoffen, insbesondere in den Schleimbildnem, enthalten sind. Das Verfahren zeichnet sich dadurch aus, dass keine erhöhte Temperatur auf die Rohstoffe des Pferdefutters einwirkt, so dass sich das Pferdefutter durch einen hohen Gehalt an gut verträglichen Inhaltsstoffen, insbesondere an Vitaminen auszeichnet. Generell kann das mit dem Verfahren hergestellte Pferdefutter als haltbares, gebrauchsfertiges bzw. zum Verzehr fertiges feuchtes Mash-Futter bezeichnet werden.

### Stand der Technik

Die DE 10 2008 006 363 A1 beschreibt Pferdfutter, das Pferdemüsli, bevorzugt mit Leinsamen, in Mischung mit Topinambur enthält, dessen Polysaccharide, insbesondere Inulin, präbiotisch wirken sollen. Das Pferdemüsli kann durch Quetschen, Mahlen oder Toasten aufgeschlossenes Getreide enthalten. GB 1914 07742 A beschreibt Pferdfutter, das unter Hitze und Druck hergestellt wird.

Ein zum unmittelbaren Gebrauch fertiges Pferdefutter, dessen Getreidebestandteile im Wesentlichen gequollen und feucht sind, und das haltbar ist, ist nicht verfügbar. Dies wird darauf zurückgeführt, dass bislang kein Verfahren zur Haltbarmachung von Pferdefutter mit gequollenem Getreide eingesetzt wird, das Vitamine erhält und eine Haltbarkeit von zumindest 6 Wochen bei 20 °C ergibt.

### Aufgabe der Erfindung

Der Erfindung stellt sich die Aufgabe, ein alternatives Herstellungsverfahren für gebrauchsfertiges Pferdefutter und das gebrauchsfertige Pferdefutter bereitzustellen, das gequollenes Getreide enthält und für zumindest 6 Wochen bei 20 °C haltbar ist.

### Beschreibung der Erfindung

Die Erfindung löst die Aufgabe mit den Merkmalen der Ansprüche und insbesondere durch ein Verfahren zur Herstellung von Pferdefutter mit den Schritten
1. Mischen von Getreide und zumindest einem Schleimbildner, der unter Getreidekleie, bevorzugt Weizenkleie, und/oder Leinsamen ausgewählt ist,
2. optional Zusetzen von Apfeltrester,
3. bevorzugt optional Zusetzen von Treber und/oder Bierhefe, z.B. Biertreber oder Weizenkleie mit Bierhefe, wobei die Bierhefe an Treber oder Kleie gebunden sein kann,
4. optional Zusetzen von funktioneller Zusatzstoffe, ausgewählt z.B. unter Vitaminen und Spurenelementen,
5. optional Zusetzen von Früchten, Gemüse, z.B. Karotten, Pastinaken, Bananen, Äpfeln und/oder Kräutern, bevorzugt zerkleinert,
6. bevorzugt Zusetzen von Konservierungsstoffen, bevorzugt ausgewählt unter Kaliumsorbat und/oder Natriumproprionat,
7. optional Zusetzen von zumindest einem Säuerungsmittel,
8. Zusetzen und Einmischen von Wasser, bevorzugt Trinkwasser, z.B. Leitungswasser, bevorzugt einer Temperatur von zumindest 40 °C, bevorzugt von maximal 85 °C, zur Erzeugung einer wässrigen Getreidemischung,
9. Abfüllen der wässrigen Getreidemischung in luftdichte, elastische Verpackungen und
10. Ausüben von statischem Druck von zumindest 4000 bar, bevorzugt bis 6000 bar, für zumindest 3 bis 5 min.

Durch das Ausüben des statischen Drucks wird das erfindungsgemäß hergestellte Pferdefutter erhalten. Das Pferdefutter zeichnet sich dadurch aus, dass es für zumindest 6 Wochen, bevorzugt für zumindest 3 Monate, bevorzugter für zumindest 6 Monate, bei 20 °C lagerfähig ist und unmittelbar gebrauchsfertig bzw. verzehrfähig ist. Bevorzugt zeichnet sich das Pferdefutter dadurch aus, dass es einen gegenüber der wässrigen Getreidemischung erhöhten Gehalt an wirksamen bzw. verfügbaren Schleimstoffen enthält und/oder die Getreidekörner zumindest anteilig aufgeschlossen sind, so dass sie leichter verdaulich sind. Es wird gegenwärtig angenommen, dass der Gehalt an wirksamem Schleimstoffen auf der Wirkung des statischen Drucks auf die Schleimbildner beruht und es ist daher bevorzugt, dass das Pferdefutter nur Schleimbildner enthält, die Getreide oder Getreidebestandteile sind, insbesondere Kleie und/oder Leinsamen und weiter ist bevorzugt, dass das Pferdefutter kein zugesetztes schleimbildendes Polysaccharid enthält, das kein Getreidebestandteil ist oder nicht aus Leinsamen stammt, z.B. kein zugesetztes Topinambur bzw. kein zugesetztes Inulin enthält.

Die Wirksamkeit bzw. erhöhte Verfügbarkeit der Schleimstoffe kann generell mit den folgenden Schritten bestimmt werden: Oszillationstest der wässrigen Phase des Pferdefutters: Durch Zentrifugation wird eine feste Phase von der wässrigen Phase getrennt. Für die wässrige Phase werden die elastischen Eigenschaften im spannungsgesteuerten Oszillationsrheometer (z.B. Typ AR 2000, TA-Instruments, New Castle, USA, Kegel-Platte-System, Kegeldurchmesser 4 cm, Kegelöffnungwinkel 4°, Messtemperatur 20 °C, Messzeit 5 min, Frequenzbereich: 1 bis 10 Hz) bestimmt. Dabei wird unter Oszillation das Speichermodul in Abhängigkeit von der Oszillationsfrequenz aufgezeichnet.

Generell kann die Wirksamkeit bzw. Verfügbarkeit der Schleimstoffe im Pferdefutter durch Messung der rheologischen Eigenschaften mit einem Rheometer erfolgen, z.B. mit einem Rheometer Typ AR 2000, TA-Instruments, New Castle, USA, mit dem Messsystem Stärkezelle und Bestimmen des Drehmoments mit zunehmender Scherzeit.
Das Wasser wird bevorzugt bis auf einen Gehalt von 60 bis 75 Gew.-% an der wässrigen Getreidemischung zugegeben. Die festen Bestandteile werden bevorzugt bei 0°C bis Raumtemperatur eingesetzt.

Optional kann dem Getreide, z.B. nach einem der Schritte 1 bis 8, Pflanzenöl zugesetzt werden, z.B. Sojaöl, Leinöl, Sonnenblumenöl, Rapsöl und/oder Maiskeimöl. Pflanzenöl kann z.B. zu 0,3 bis 2 Gew.-% am Pferdefutter zugesetzt werden.

Bevorzugt kann vor Zusetzen des Wassers aus den festen Bestandteilen durch Mischen eine Vormischung hergestellt werden, der anschließend das Wasser zugesetzt wird.

Das Getreide ist bevorzugt ausgewählt unter Gerste, Hafer und/oder Weizen, jeweils bevorzugt zu Flocken gequetscht und/oder getoastet, und Mischungen von zumindest zweien dieser.

Das optionale Säuerungsmittel, z.B. Zitronensäure, wird zugesetzt, um die wässrige Getreidemischung auf einen pH von maximal 4 einzustellen, z.B. zu 1,5 bis 2,5 Gew.-% an der wässrigen Getreidemischung, um den pH-Wert auf unter 4 einzustellen.
Alternativ oder zusätzlich zum Zusatz des Säuerungsmittels kann die wässrige Getreidemischung vor dem Abfüllen in flexible luftdichte Verpackungen und Ausüben des hydrostatischen Drucks fermentiert werden, z.B. bis ein pH von 4 erreicht ist. Die Fermentation kann durch die autochtone Mikrobiotika der Rohstoffe, insbesondere des Getreides und/oder der Kleie erfolgen, und/oder durch Zusetzen einer Starterkultur für eine Milchsäuregärung und Inkubieren. Als Starterkultur können als Mikroorganismen Milchsäurebakterien zugesetzt werden, z.B. Lactobacillen und/oder Leuconostoc. Die Fermentation kann bei 10 bis 35 °C, bevorzugt bei 30 °C durch Inkubation erfolgen, z.B. bis ein pH von ca. 4 erreicht ist, z.B. für 0,5 bis 2 d. Ein solcher Fermentationsschritt hat den Vorteil, den Phytatgehalt der Getreidemischung zu senken und daher den verfügbaren Gehalt an löslichem Eisen, Zink und Kalzium zu erhöhen. Das anschließende Ausüben des hydrostatischen Drucks führt zur Inaktivierung auch der zugesetzten Mikroorganismen.

Bevorzugt führt der Fermentationsschritt zu einem geringeren Gehalt des Pferdefutters, das nach dem Ausüben des statischen Drucks erhalten wird, an Bakteriensporen und/oder Pilzsporen. Dies wird darauf zurückgeführt, dass Bakteriensporen und/oder Pilzsporen während der Fermentation auskeimen können und daher beim anschließenden Ausüben von statischem Druck inaktiviert werden.

Kaliumsorbat kann z.B. zu 0,2 Gew.-%, Natriumpropionat z.B. zu 0,1 Gew.-% in Bezug auf das fertige Pferdefutter bzw. in Bezug auf die wässrige Getreidemischung zugesetzt werden. Der bevorzugte Zusatz von Konservierungsmittel erfolgt bevorzugt nur bis zu einem Gehalt, der ausreicht, das Wachstum von Bakteriensporen und/oder Pilzsporen zu unterdrücken, die während der Lagerung des Pferdefutters auskeimen.

Vitamine sind z.B. Vitamin A, Vitamin D3, Vitamin E und/oder Biotin, bevorzugt alle dieser. Spurenelemente sind z.B. Eisen, z.B. als Eisen(II)-sulfat, Kupfer, z.B. als Kupfer(II)-sulfat, Mangan, z.B. als Mangan(II)-oxid, Zink, z.B. als Zinkoxid, Jod, z.B. als Kalziumjodat, Selen, z.B. als Natriumselenit und/oder Kobalt, z.B. als Kobalt(II)-carbonat, bevorzugt auf einem Trägerstoff als Granulat, bevorzugt alle dieser.

Optional können der wässrigen Getreidemischung vor dem Abfüllen in luftdichte und elastische Verpackungen bzw. vor Ausüben des hydrostatischen Drucks, bevorzugt nach einem optionalen Fermentationsschritt bzw. unmittelbar vor dem Abfüllen in die Verpackungen und Ausüben des hydrostatischen Drucks, Sporen von nematoziden Pilzen zugesetzt werden, z.B. von Duddingtonia flagrans. Der Gehalt des Pferdefutters an Sporen nematozider Pilze führt beim Pferd zu einer Verminderung der Nematodenbelastung. Der Vorteil der Behandlung der wässrigen Getreidemischung mit dem hydrostatischen Druck liegt darin, dass Sporen von nematoziden Pilzen nicht bzw. nicht vollständig inaktiviert werden, durch den niedrigen pH des Pferdefutters nicht während der Lagerung auskeimen und daher nach der Aufnahme durch ein Pferd aktiv werden können. Nematozide Pilze sind bevorzugt Mucor circinelloides, Duddingtonia flagrans und/oder Verticillium chlamydosporium, bevorzugt Mucor circinelloides und Duddingtonia flagrans. Die Sporen können z.B. zu einer Konzentration von insgesamt ca. 1 x 10⁶ bis 5 x 10⁶ Sporen je kg wässriger Getreidemischung zugesetzt werden.

Weiter optional kann das Getreide mit Wasser versetzt und keimen gelassen werden, z.B. vor Schritt 1. Dazu ist das Getreide nicht vorbehandelt und wird mit Wasser versetzt inkubiert, z.B. bei 10 bis 20 °C für 1 bis 10 d, bevorzugt in einfacher Schicht mit kontrollierter Belüftung.

Generell kann das erfindungsgemäß hergestellte Pferdefutter als Mashfutter bezeichnet werden, in dem das Getreide gequollen ist und das eine breiige Konsistenz hat. Bevorzugt weist das erfindungsgemäß hergestellte Pferdefutter kein ungebundenes Wasser auf und nicht von festen Bestandteilen aufgenommenes Wasser ist mit Schleimstoffen versetzt bzw. an Schleimstoffe angelagert.

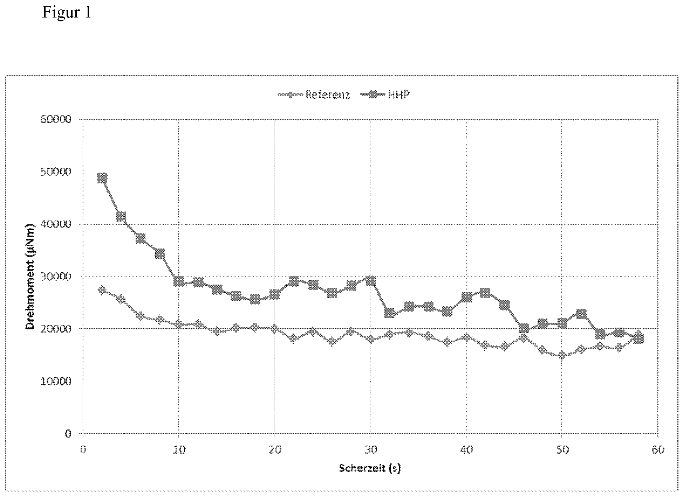

Die Erfindung wird nachfolgend anhand von Beispielen mit Bezug auf die Figur 1 beschrieben, die Messwerte der rheologischen Eigenschaften von erfindungsgemäß hergestelltem Pferdefutter und einer identischen Mischung, die nicht mit dem Hochdruck behandelt wurde, als Referenz zeigt.

### Beispiel 1: Herstellung von Pferdefutter

Als Getreide wurden getoastete Gerstenflocken, gequetschter Hafer, Weizenkleie, Futterhaferflocken, gemahlener Leinsamen als Schleimbildner mit Bierhefe auf Weizenkleie mit einem Gehalt an Sojaöl und Natriumchlorid, Biertreber mit Bierhefe und Apfeltrester, Vitamine und Spurenelemente, 1 Gew.-% Zitronensäure, 0,2 Gew.-% Kaliumsorbat und 0,1 Gew.-% Natriumpropionat, jeweils bezogen auf die wässrige Gesamtmischung, gemischt und mit 70 Gew.-% Leitungswasser (85 °C), bezogen auf die wässrige Gesamtmischung, versetzt und vermischt. Die Vitamine waren bezogen auf 1 kg der vorgenannten trockenen Bestandteile 10.300 I.E. Vitamin A, 1.143 I.E. Vitamin D3, 46 mg Vitamin E und 114 mg Biotin. Die Spurenelemente waren 22 mg Eisen als Eisen(II)-sulfat, 25 mg Kupfer als Kupfer(II)-sulfat, 57 mg Mangan als Mangan(II)-oxid, 86 mg Zink als Zinkoxid, 1,142 mg Jod als Kalziumjodat, 0,36 mg Selen als Natriumselenit und 0,46 mg Kobalt als Kobalt(II)-carbonat, Granulat auf einem Träger. Der pH der wässrigen Getreidemischung betrug etwa 4.

Die erhaltene wässrige Getreidemischung wurde zu je 1 kg in aluminiumbeschichtete Kunststofffolienbeutel als luftdichte Verpackungen gefüllt und diese wurden luftblasenfrei zugeschweißt. Diese Verpackungen wurden für 3 min einem hydrostatischen Druck von 6000 bar in einer Hochdruckkammer (NC-Hyperbaric, Spanien) ausgesetzt. Der Druck wurde über 6 bis 7 min auf 6000 bar aufgebaut, für die Zeit von 3 min gehalten und anschließend entspannt. Als Ergebnis wurde das erfindungsgemäß hergestellte Pferdefutter erhalten. Die Analyse dieses Pferdefutters ergab im Vergleich mit der wässrigen Getreidemischung unmittelbar vor der Hochdruckbehandlung einen höheren Anteil der Schleimstoffe und daher eine erhöhte Wirksamkeit der in den eingesetzten Rohstoffen enthaltenen Schleimstoffe.

Es hat sich gezeigt, dass die Haltbarkeit bei Lagerung des Pferdefutters bei 20 °C zumindest 58 d betrug. Zum Vergleich wurde dieselbe wässrige Getreidemischung, jedoch ohne Zitronensäure angesetzt und gleich behandelt. Diese nicht gesäuerte Mischung zeigte eine Haltbarkeit von nur 28 d. Die Haltbarkeit wurde durch Analyse der aerob mesophilen Gesamtkeimzahl bestimmt.

Es hat sich gezeigt, dass die Schleimstoffe nach der Hochdruckbehandlung der wässrigen Getreidemischung im hergestellten Pferdefutter in höherem Maße und/oder mit höherer Wirksamkeit zur Verfügung stehen und daher direkt im Schlund und Magen des Pferds wirken können. Dies bewirkt eine für den Magen und die Darmwand schonende Verdauung. Das erfindungsgemäß hergestellte Pferdefutter ist daher besser verdaulich war als die wässrige Getreidemischung vor der Hochdruckbehandlung.

### Beispiel 2: Herstellung von Pferdefutter mit Fermentation

Die wässrige Getreidemischung von Beispiel 1, jedoch ohne den Zusatz der Zitronensäure, wurde auf 20 °C temperiert, mit einer Starterkultur versetzt und für 2 bis 5 d ohne Bewegung inkubiert, bevor sie anschließend in die Kunststofffolienbeutel gefüllt wurde, diese verschweißt und mit Hochdruck behandelt wurden, wie in Beispiel 1 beschrieben.

Das so hergestellte Pferdefutter zeigte ebenfalls eine höhere Wirksamkeit der Schleimstoffe im Vergleich mit der wässrigen Getreidemischung vor der Hochdruckbehandlung und eine Haltbarkeit bei 20 °C von zumindest 58 d.

### Beispiel 3: Herstellung von Pferdefutter mit nematoziden Pilzsporen

Die wässrige Getreidemischung von Beispiel 1 wurde mit jeweils 2 x 10⁶ Sporen von Duddingtonia flagrans und Mucor circinelloides versetzt und unmittelbar anschließend in Kunststofffolienbeutel abgefüllt, diese verschweißt und mit dem Hochdruck behandelt, wie in Beispiel 1 beschrieben.

Alternativ wurde die fermentierte Getreidemischung von Beispiel 2 unmittelbar vor dem Abfüllen in Kunststofffolienbeutel mit den Sporen von Duddingtonia flagrans und Mucor circinelloides versetzt, abgefüllt und mit dem Hochdruck behandelt.

Im Anschluß an die Lagerung bei 20 °C für 6 Wochen zeigte sich, dass die Sporen von Duddingtonia flagrans und Mucor circinelloides zumindest zum Teil lebensfähig waren, bevorzugt nach Verdünnen bzw. Neutralisieren der Säure.

### Beispiel 4: Herstellung von Pferdefutter mit gekeimtem Getreide

Als Getreide wurden gekeimte Gerste, getoastete Gerstenflocken, gequetschter Hafer, Weizenkleie, Futterhaferflocken, gemahlener Leinsamen als Schleimbildner mit Bierhefe auf Weizenkleie mit einem Gehalt an Sojaöl und Natriumchlorid, Biertreber mit Bierhefe und Apfeltrester, Vitamine und Spurenelemente, 1 Gew.-% Zitronensäure, 0,2 Gew.-% Kaliumsorbat und 0,1 Gew.-% Natriumpropionat, jeweils bezogen auf die wässrige Gesamtmischung, gemischt und mit 70 Gew.-% Leitungswasser (85 °C), bezogen auf die wässrige Gesamtmischung, versetzt und vermischt. Die gekeimte Gerste wurde durch Wässern von Gerste und Inkubieren bei 20 °C unter kontrollierter Belüftung für 10 d erhalten.

Die wässrige Getreidemischung wurde wie in Beispiel 1 beschrieben in Kunststofffolienbeutel abgefüllt und mit dem Hochdruck behandelt. Die Analyse des so hergestellten Pferdefutters zeigte höhere Gehalte an Vitaminen, insbesondere B1, B2, C, E, Niacin und Folsäure, sowie an Spurenelementen, insbesondere an Eisen, Kalzium, Zink und Magnesium im Vergleich zum Pferdefutter von Beispiel 1. Die Haltbarkeit und der Gehalt an Schleimstoffen wurden entsprechend des Pferdefutters von Beispiel 1 erreicht.

### Beispiel 5: Messung der rheologischen Eigenschaften von erfindungsgemäß hergestelltem Pferdefutter

Das Pferdefutter wurde aus 26,64 g einer im Handel erhältlichen trockenen Mashmischung für Pferde, 4,00 g Apfeltrester (Herbavital F12, agro Food Solution GmbH), 68,00 g Leitungswasser, 68 °C und 1,36 g kristalliner Zitronensäure angemischt und diese wässrige Getreidemischung 35 min bei Raumtemperatur quellen gelassen, davon die Hälfte in einem versiegelten Kunststoffbeutel mit Hochdruck von 6000 bar für 3 min behandelt und die andere Hälfte als Vergleichsmischung ohne Hochdruckbehandlung eingesetzt. Anschließend wurden das erfindungsgemäß mit Hochdruckbehandlung hergestellte Pferdefutter (HHP) und die Vergleichsmischung (Referenz) für 2 h bei 38 °C gelagert. Zur Messung wurden beide Proben vollständig verwendet. Im Rheometer (Typ AR 2000, TA-Instruments) mit einer sogenannten Stärkezelle (SPC) als Messsystem (statischer Becher, darin koaxial mit Abstand senkrechter Rotor mit radialen Rührschaufeln, mit konstanter Drehzahl angetrieben, Messung des Drehmoments) wurde das Drehmoment während der Scherung aufgezeichnet. Die Figur 1 zeigt anhand der Messwerte, dass das erfindungsgemäß hergestellte Pferdefutter mehr langkettige Moleküle enthält als die Referenz. Die Scherung führt mit zunehmender Zeit zu einer Denaturierung dieser langkettigen Moleküle und erst dann eine Abnahme des gemessenen Drehmoments. Dieses Verhalten wird gegenwärtig darauf zurückgeführt, dass mit zunehmender Zeit durch die Scherung die langkettigen Moleküle aufgefaltet werden.

Diese Messung zeigt, dass das erfindungsgemäße Verfahren zu einer Erhöhung der Wirksamkeit bzw. einer Erhöhung der Verfügbarkeit von Schleimstoffen führt.

## Patentansprüche

1. Verfahren zur Herstellung von Pferdefutter mit den Schritten
1. Mischen von Getreide und zumindest einem Schleimbildner, der Getreidekleie und/oder Leinsamen ist,
2. optional Zusetzen von Apfeltrester,
3. optional Zusetzen von Treber, Kleie und/oder Bierhefe,
4. optional Zusetzen von Früchten, Gemüse, z.B. Karotten, Pastinaken, Bananen, Äpfeln und/oder Kräutern,
5. optional Zusetzen von Vitaminen und Spurenelementen,
6. optional Zusetzen von Konservierungsstoffen,
7. optional Zusetzen von zumindest einem Säuerungsmittel,
8. Zusetzen und Einmischen von Wasser zur Erzeugung einer wässrigen Getreidemischung,
9. Abfüllen der wässrigen Getreidemischung in luftdichte, elastische Verpackungen und
10. Ausüben von statischem Druck von zumindest 4000 bar für zumindest 3 min.

2. Verfahren nach Anspruch 1, **dadurch gekennzeichnet, dass** das zugesetzte Wasser eine Temperatur von 0 bis 85 °C hat.

3. Verfahren nach einem der voranstehenden Ansprüche, **dadurch gekennzeichnet, dass** der statische Druck zumindest 5000 bis zumindest 6000 bar beträgt.

4. Verfahren nach einem der voranstehenden Ansprüche, **dadurch gekennzeichnet, dass** der statische Druck für zumindest 4 min ausgeübt wird.

5. Verfahren nach einem der voranstehenden Ansprüche, **dadurch gekennzeichnet, dass** das Getreide Gerste, Hafer, Weizen oder eine Mischung von zumindest zweien dieser ist.

6. Verfahren nach einem der voranstehenden Ansprüche, **dadurch gekennzeichnet, dass** das Getreide zu Flocken gequetscht und/oder getoastet ist.

7. Verfahren nach einem der voranstehenden Ansprüche, **dadurch gekennzeichnet, dass** die wässrige Getreidemischung vor dem Abfüllen und Ausüben des statischen Drucks bis zum Erreichen eine pH-Werts von 4 fermentiert wird.

8. Verfahren nach einem der voranstehenden Ansprüche, **dadurch gekennzeichnet, dass** der wässrigen Getreidemischung vor dem Abfüllen und Ausüben des statischen Drucks eine Starterkultur für eine Milchsäuregärung zugesetzt wird und sie inkubiert wird.

9. Verfahren nach einem der voranstehenden Ansprüche, **dadurch gekennzeichnet, dass** der wässrigen Getreidemischung unmittelbar vor dem Abfüllen und Ausüben des statischen Drucks Sporen zumindest eines nematoziden Pilzes zugesetzt werden.

10. Verfahren nach einem der voranstehenden Ansprüche, **dadurch gekennzeichnet, dass** zumindest ein Anteil des Getreides vor dem Mischen keimen gelassen wird.

11. Verfahren nach einem der voranstehenden Ansprüche, **dadurch gekennzeichnet, dass** es nur Schleimbilder enthält, die Getreide oder Getreidebestandteile sind.

12. Verfahren nach einem der voranstehenden Ansprüche, **dadurch gekennzeichnet, dass** aus dem Getreide und zumindest einem Schleimbildner, der Getreidekleie und/oder Leinsamen aufweist, optional Apfeltrester, optional Treber, Kleie und/oder Bierhefe, optional Vitaminen und Spurenelementen, optional Pflanzenöl, optional zumindest einem Säuerungsmittel, optional Konservierungsstoffen, eine Vormischung hergestellt wird, der anschließend Wasser zur Erzeugung einer wässrigen Getreidemischung zugesetzt und eingemischt wird.

13. Verfahren nach einem der voranstehenden Ansprüche, **dadurch gekennzeichnet, dass** so viel Wasser zugesetzt und eingemischt wird, dass in der wässrigen Getreidemischung vor und/oder nach dem Ausüben des statischen Drucks im erhaltenen Pferdefutter das Wasser nur in den festen Bestandteilen und gebunden an Schleimstoffe enthalten ist.

14. Pferdefutter, das gequollenes Getreide enthält, in luftdichter, elastischer Verpackung enthalten ist und für zumindest 6 Wochen bei 20 °C haltbar ist, erhältlich nach einem Verfahren nach einem der voranstehenden Ansprüche.

15. Pferdefutter nach Anspruch 14, **dadurch gekennzeichnet, dass** es keine vegetativen Pilze und keine vegetativen Bakterien aufweist.

16. Pferdefutter nach Anspruch 14 oder 15, **dadurch gekennzeichnet, dass** es Sporen zumindest eines nematoziden Pilzes enthält.

## Claims

1. Process for producing horse feed comprising the steps of
1. mixing grain and at least one slime former, which is grain bran and/or linseed,
2. optionally adding apple pomace,
3. optionally adding brewers grains, bran and/or brewer's yeast
4. optionally adding of fruit, vegetables, e.g. carrots, parsnips, bananas, apples and/or herbs,
5. optionally adding of vitamins and trace elements,
6. optionally adding preservative agents,
7. optionally adding at least one acidifying agent,
8. adding and mixing in of water for generating an aqueous grain mixture,
9. filling of the aqueous grain mixture into airtight elastic packages and
10. exerting static pressure of at least 4000 bar for at least 3 min.

2. Process according to claim 1, **characterized in that** the added water has a temperature of 0 to 85 °C.

3. Process according to one of the preceding claims, **characterized in that** the static pressure is at least 5000 to at least 6000 bar.

4. Process according to one of the preceding claims, **characterized in that** the static pressure is exerted for at least 4 min.

5. Process according to one of the preceding claims, **characterized in that** the grain is barley, oat, wheat or a mixture of at least two of these.

6. Process according to one of the preceding claims, **characterized in that** the grain is crushed to flakes and/or is toasted.

7. Process according to one of the preceding claims, **characterized in that** the aqueous grain mixture prior to the filling and the exertion of the static pressure is fermented until reaching a pH value of 4.

8. Process according to one of the preceding claims, **characterized in that** prior to the filling and the exertion of the static pressure a starter culture for a lactic acid fermentation is added to the aqueous grain mixture and this is incubated.

9. Process according to one of the preceding claims, **characterized in that** directly prior to the filling and the exertion of the static pressure spores of at least one nematicidal fungus are added to the aqueous grain mixture.

10. Process according to one of the preceding claims, **characterized in that** prior to the mixing at least a proportion of the grain is allowed to germinate.

11. Process according to one of the preceding claims, **characterized in that** it contains only slime formers which are grains or grain constituents.

12. Process according to one of the preceding claims, **characterized in that** a pre-mixture is produced of the grain and at least one slime former which has grain bran and/or linseed, optionally apple pomace, optionally brewers grains, brans and/or brewer's yeast, optionally vitamins and trace elements, optionally plant oil, optionally at least one acidifying agent, optionally preservative agents, to which pre-mixture subsequently water is added and mixed in for generating an aqueous grain mixture.

13. Process according to one of the preceding claims, **characterized in that** water is added in an amount and mixed in such that in the aqueous grain mixture in the horse feed obtained prior to and/or after exerting the static pressure the water is contained only in the solid constituents and bound to slime compounds.

14. Horse feed that comprises swollen grains, is contained in an air tight elastic package and is shelf-stable for at least 6 weeks at 20 °C, obtainable according to a process according to claim 1.

15. Horse feed according to claim 14, **characterized in that** it does not contain vegetative fungi and no vegetative bacteria.

16. Horse feed according to claim 14 or 15, **characterized in that** it contains spores of at least one nematicidal fungus.

## Revendications

1. Procédé de production de fourrage pour chevaux avec les étapes
**1.** mélange de céréale avec au moins une substance constituant un mucilage, laquelle est le son de céréale et/ou les graines de lin,
**2.** ajout facultatif de marc de pomme,
**3.** ajout facultatif de drêche, son et/ou levure de bière,
**4.** ajout facultatif de fruits, légumes, e.g. carottes, panais, bananes, pommes et/ou herbes,
**5.** ajout facultatif de vitamines et oligoéléments,
**6.** ajout facultatif de conservateurs,
**7.** ajout facultatif d'au moins un acidifiant,
**8.** ajout et incorporation d'eau pour produire un mélange céréalier aqueux,
**9.** mise du mélange céréalier aqueux en emballages étanches et élastiques
**10.** application d'une pression statique d'au moins 4000 bar pendant au moins 3 min.

2. Procédé selon la revendication **1**, **caractérisé en ce que** l'eau ajoutée a une température de 0 à 85 °C.

3. Procédé selon l'une des revendications précédentes, **caractérisé en ce que** la pression statique est au moins 5000 à au moins 6000 bar.

4. Procédé selon l'une des revendications précédentes, **caractérisé en ce que** la pression statique est appliquée pendant au moins 4 min.

5. Procédé selon l'une des revendications précédentes, **caractérisé en ce que** la céréale est l'orge, l'avoine, le blé ou un mélange d'au moins deux de ceux-ci.

6. Procédé selon l'une des revendications précédentes, **caractérisé en ce que** la céréale est pressée en flocons et/ou grillée.

7. Procédé selon l'une des revendications précédentes, **caractérisé en ce qu'**on fait fermenter le mélange céréalier aqueux avant la mise en emballage et l'application de la pression statique jusqu'à ce qu'un pH de 4 soit atteint.

8. Procédé selon l'une des revendications précédentes, **caractérisé en ce qu'**une culture de départ pour une fermentation lactique est ajoutée au mélange céréalier aqueux et qu'il est incubé avant la mise en emballage et l'application de la pression statique.

9. Procédé selon l'une des revendications précédentes, **caractérisé en ce que** des spores au moins d'un champignon nématicide sont ajoutées au mélange céréalier aqueux immédiatement avant la mise en emballage et l'application de la pression statique.

10. Procédé selon l'une des revendications précédentes, **caractérisé en ce qu'**on laisse germer au moins une portion de la céréale avant le mélange.

11. Procédé selon l'une des revendications précédentes, **caractérisé en ce qu'**il ne contient que des substances constituant des mucilages qui sont des céréales ou des composants de céréales.

12. Procédé selon l'une des revendications précédentes, **caractérisé en ce que**, à partir de la céréale et d'au moins une substance constituant un mucilage comportant du son de céréale et/ou des graines de lin, facultativement du marc de pomme, facultativement de la drêche, du son et/ou de la levure de bière, facultativement des vitamines et des oligoéléments, facultativement de l'huile végétale, facultativement au moins un acidifiant, facultativement des conservateurs, un prémix est produit auquel de l'eau est ensuite ajoutée et incorporée pour produire un mélange céréalier aqueux.

13. Procédé selon l'une des revendications précédentes, **caractérisé en ce que** de l'eau est ajoutée et incorporée dans une quantité que, dans le mélange céréalier aqueux avant et/ou après l'application de la pression statique, l'eau dans le fourrage pour chevaux obtenu ne soit contenue que dans les composants solides et liée aux mucilages.

14. Fourrage pour chevaux, contenant de la céréale gonflée, étant contenu dans un emballage étanche à l'air élastique et pouvant se conserver pendant au moins 6 semaines à 20 °C, qui peut être obtenu selon un procédé selon l'une des revendications précédentes.

15. Fourrage pour chevaux selon la revendication 14, **caractérisé en ce qu'**il ne contient pas de champignons végétatifs ni de bactéries végétatives.

16. Fourrage pour chevaux selon la revendication 14 ou 15, **caractérisé en ce qu'**il contient des spores au moins d'un champignon nématicide.
